# EUROPEAN PATENT SPECIFICATION

(11) **EP 2 328 203 B1**
(45) Date of publication and mention of the grant of the patent: **01.01.2020**
(21) Application number: 09811262.6
(22) Date of filing: 31.08.2009
(51) Int. Cl.: H01M 2/10, H01M 4/38, H01M 10/613, H01M 10/623, H01M 10/643, H01M 10/658, H01M 10/659, H01M 10/052

(54) **BATTERY PACK**
BATTERIEPACKUNG
BLOC-BATTERIE

(30) Priority: 05.09.2008 JP 2008228963
(43) Date of publication of application: 01.06.2011
(73) Proprietor: Panasonic Intellectual Property Management Co., Ltd., Osaka-shi, Osaka 540-6207 (JP)
(72) Inventor: IWAMOTO, Kazuya, 1-61, Shiromi 2-chome, Chuo-ku, Osaka-shi, Osaka 540-6207 (JP); YAMAMOTO, Taisuke, 1-61, Shiromi 2-chome, Chuo-ku, Osaka-shi, Osaka 540-6207 (JP); TAKEZAWA, Hideharu, 1-61, Shiromi 2-chome, Chuo-ku, Osaka-shi, Osaka 540-6207 (JP); YOKOYAMA, Tomohiko, 1-61, Shiromi 2-chome, Chuo-ku, Osaka-shi, Osaka 540-6207 (JP)
(74) Representative: TBK
(86) International application number: PCT/JP2009/004266
(87) International publication number: WO 2010/026732

(56) References cited:
- WO-A1-01/45185
- GB-A- 2 121 159
- JP-A- 4 162 347
- JP-A- 2003 031 187
- JP-A- 2003 346 754
- JP-A- 2004 228 047
- JP-A- 2004 259 613
- JP-A- 2008 192 342
- US-A- 5 985 013
- US-B1- 6 241 909
- US-B1- 6 586 912

## Description

### Technical Field

The present invention relates to a battery pack configured such that a secondary battery is stored in a container.

### Background Art

In recent years, due to the spread of portable devices, such as notebook computers and mobile phones, there is an increasing demand for batteries that are power supplies of the portable devices. Especially, there is an increasing demand for secondary batteries which are small in size, light in weight, high in energy density, and repeatedly rechargeable. As such battery, a lithium ion secondary battery using a nonaqueous solvent as an electrolytic solution has been intensely researched and developed.

In accordance with the increase in function of the portable devices, the energy of the lithium ion secondary battery is increasing. In proportion to this, the amount of heat which may be generated at the time of a potential malfunction is also increasing.

For ease of handleability, such secondary battery is stored in a resin container and sold as a battery pack. Used as an exterior container constituting the battery pack is a container (see PTL 1, for example) formed by polycarbonate resin mixed with a halogen-based flame retardant or a container (see PTL 2, for example) formed by a resin composition containing polyphenylene ether, styrene-based resin, and a phosphoester-based flame retardant.

In order to further increase the flame retardancy of the above resin composition, proposed is to mix the resin composition with inorganic hydroxide, such as magnesium hydroxide (Mg(OH)₂), aluminum hydroxide (Al(OH)₃), or dawsonite (NaAl(OH)₂CO₃) (see paragraph 0023 in PTL 2, for example). When each of the magnesium hydroxide and the aluminum hydroxide is heated, it absorbs ambient heat and discharges water (H₂O). Therefore, combustion heat is reduced by this heat absorbing action. Thus, a flame-retardant effect can be exerted.

As another method for suppressing the temperature increase of the surface of the battery pack by utilizing the heat absorbing action when the malfunction has occurred, proposed is a method for introducing a polymeric material in the battery pack to utilize melting latent heat generated when the polymeric material melts (see PTL 3, for example).

Moreover, from a viewpoint that is not a viewpoint of safety, proposed is a battery pack in which a heat insulating material is inserted. Specifically, in order to overcome a drawback of the decrease in battery characteristics under a low temperature circumstance, proposed is a battery pack configured such that by inserting the heat insulating material in the battery pack to shield the battery from the ambient temperature, the battery is not affected by the ambient temperature and the battery characteristics do not decrease when in use (see PTL 4, for example).

Moreover, to prevent moisture from intruding from the outside, proposed as an exterior material of the battery pack is a stack body formed by stacking an exterior resin layer, a metal layer, and an inner resin layer in this order (see PTL 5, for example).

GB2121159 (A) relates to a heat insulating device with a double-walled housing, wherein a space is provided between the two housing walls, which comprises at least one screening device which prevents the flow of heat between the two housing walls and is disposed perpendicular to the temperature gradients. This screening device is formed by a heat insulating cushion which comprises a cover of aluminium or high-grade steel. Preferably, the cover is formed by two sheets which are welded or soldered together. The insulating material is arranged between these two sheets and may consist of two powdery infrared optical opacifiers which have been mixed together. It may also consist of glass or ceramic fibre paper. A plurality of heat insulating cushions is disposed around the inner housing wall of the housing.

US6586912 (B1) relates to a method and an apparatus for containing heat generated by a battery to reduce the amplitude of a temperature excursion to enhance safety in temperature critical applications, such as in implantable medical devices. The apparatus employs a heat absorber closely thermally coupled to the battery. The heat absorber includes heat absorbing material exhibiting an endothermic phase change at a temperature below that produced by the battery.

US5985013 (A) relates to a method and a mixture for preparing an ablative material for fire and heat protection. The mixture includes calcium sulfate hemihydrate and a hydrated salt and the ablative material is prepared by adding water to the mixture.

US6241909 (B1) teaches to prevent the increase of temperature in heat sensitive devices during heat generating conditions through the absorption of heat, by providing a hydrated salt such as Lithium Chloride, Magnesium Chloride, Magnesium Sulfate, Sodium Sulfate, Aluminum Oxide, Aluminum Sulfate, Aluminum Fluoride, Aluminum Nitrate, Lithium Nitrate, Sodium Borate, Beryllium Sulfate, Sodium Phosphate, Calcium Chloride, Zinc Sulfate, Aluminum Chloride, Zinc Chloride and the mixtures thereof, in an amount sufficient to effect the required heat absorption.

### Citation List

### Patent Literature

PTL 1: Japanese Laid-Open Patent Application Publication No. 10-46015
PTL 2: Japanese Patent No. 3408676
PTL 3: Japanese Laid-Open Patent Application Publication No. 2004-228047
PTL 4: Japanese Laid-Open Patent Application Publication No. 5-234573
PTL 5: Japanese Laid-Open Patent Application Publication No. 2008-4506

### Summary of Invention

### Technical Problem

In a case where the secondary battery stored in the battery pack is a lithium secondary battery whose negative electrode is graphite and whose positive electrode is lithium-containing transition metal oxide, such as lithium cobalt oxide or lithium nickel oxide, the graphite burns and vaporizes at the time of the malfunction of the battery, so that high-temperature high-pressure gas and flame may blow out from the secondary battery.

Moreover, in accordance with the increase in capacity and energy density of the battery in recent years, used as the negative electrode of the lithium secondary battery instead of the graphite is silicon, tin, an alloy of silicon or tin, or an oxide of silicon or tin, each of which potentially has an extremely large capacity. If the malfunction of such lithium secondary battery occurs, lithium orthosilicate or lithium stannate generated by the reaction between the negative electrode material and lithium may flow out as high-temperature molten alkali salt.

Even if a heat absorbing layer or a heat insulating layer is provided in the battery pack as in PTLs 3 and 4, such layer may react with an effluent, such as the molten alkali salt, having high reactivity. As a result, the function of the heat absorbing layer or heat insulating layer may be lost.

The present invention was made to solve the above conventional problems, and an object of the present invention is to provide a battery pack configured to prevent contents from flowing out to the outside of the battery pack and suppress the temperature increase of the surface of the battery pack.

### Solution to Problem

To solve the above problems, the present invention is a battery pack including a secondary battery; a molded body configured to store therein a plurality of secondary batteries; a temperature increase suppressing layer provided between the secondary batteries and an inner surface of the molded body to suppress a temperature increase of an outer surface of the molded body; and a block layer provided between the secondary batteries and the temperature increase suppressing layer to block leakage from the secondary batteries, wherein the temperature increase suppressing layer is a heat absorbing layer containing a flame-retardant binding agent and a heat absorbing agent, wherein the heat absorbing agent contains at least one selected from the group consisting of calcium sulfate dihydrate (CaSO₄·2H₂O), sodium hydrogen carbonate (NaHCO₃), aluminum hydroxide (Al(OH)₃), magnesium hydroxide (Mg(OH)₂), and calcium carbonate (CaCO₃); and the flame-retardant binding agent contains at least one selected from the group consisting of polyvinylidene chloride and polyvinylidene fluoride.

In the present invention, the battery pack denotes a battery pack configured such that for ease of handleability of the secondary battery, a plurality of secondary battery elements are stored in a container together with a predetermined circuit.

Even if the leakage, such as gas, flame, molten alkali salt, or electrolytic solution, from the secondary battery occurs, it is possible to prevent the leakage from flowing out to the outside of the battery pack by providing the block layer in the battery pack. Further, by providing the block layer on an inner side of the temperature increase suppressing layer, the temperature increase suppressing layer does not directly contact the leakage, such as the molten alkali salt. Therefore, it is possible to avoid the loss of the functions, such as heat absorption and heat insulation, of the temperature increase suppressing layer by the reaction with the leakage. With this, even if the molten alkali salt leaks from the battery, the temperature increase of the surface of the battery pack can be suppressed.

It is preferable that the block layer of the present invention be formed by a material resistant to the molten alkali salt in order that the molten material of the alkali salt, such as especially lithium orthosilicate or lithium stannate, can be prevented from flowing out to the outside of the battery pack. To be specific, it is desirable that the material have an adequately high melting point (which is at least higher than the melting point of the alkali salt) and do not have reactivity with the molten alkali salt. Examples of such material are preferably metals. Among the metals, iron, titanium, zirconium, vanadium, niobium, molybdenum, tantalum, tungsten, titanium nitride, or stainless steel is preferable. Further, iron, vanadium, niobium, molybdenum, tantalum, tungsten, titanium nitride, or stainless steel is more preferable.

### Advantageous Effects of Invention

In accordance with the battery pack of the present invention, in a case where a malfunction, such as a case where contents, such as the molten material, flows out from the secondary battery, occurs, it is possible to prevent the contents from flowing out to the outside of the battery pack and surely suppress the temperature increase of the surface of the battery pack.

### Brief Description of Drawings

[Fig. 1] Fig. 1 is a configuration diagram showing a cross section of a battery pack in Embodiment 1 of the present invention.
[Fig. 2] Fig. 2 is a configuration diagram showing a cross section of the battery pack in Embodiment 3 of the present invention.
[Figs. 3] Figs. 3 are configuration diagrams each showing a cross section of a battery pack model in Test Example 10. Fig. 3(a) is an upper surface side view. Fig. 3(b) is a side surface cross-sectional view.

### Description of Embodiments

Hereinafter, embodiments and reference embodiments of the present invention will be explained in reference to the drawings.

Each of Embodiment 1 and Reference Embodiment 2 will explain a case where a heat absorbing layer is used as a temperature increase suppressing layer, and Reference Embodiment 3 will explain a case where a heat insulating layer is used as the temperature increase suppressing layer.

### Embodiment 1

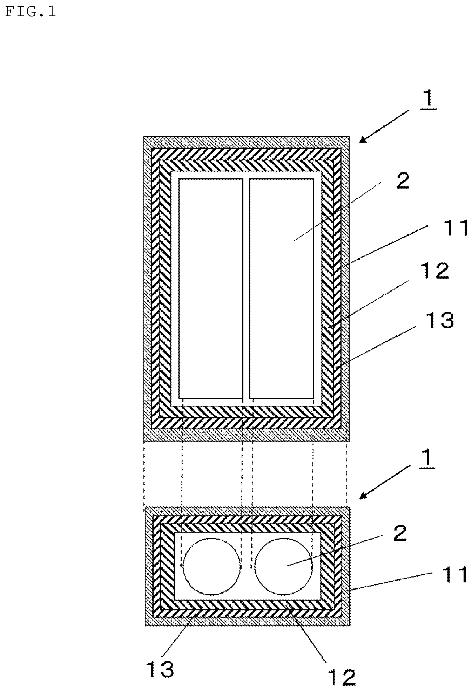

Fig. 1 is a configuration diagram showing a cross section of a battery pack 1 in Embodiment 1 of the present invention. A resin molded body 11 is formed on an outermost side of the battery pack 1. A heat absorbing layer 13 is formed so as to contact an inner wall of the resin molded body 11. A block layer 12 made of a material resistant to molten alkali salt is further formed so as to contact an inner surface of the heat absorbing layer. A plurality of rechargeable secondary batteries 2 are stored in this three-layer structure to constitute the battery pack 1.

The secondary battery 2 is a lithium secondary battery configured such that silicon, tin, an alloy of silicon or tin, or an oxide of silicon or tin is used as an active material of a negative electrode thereof and lithium-containing transition metal oxide, such as lithium cobalt oxide or lithium nickel oxide, is used as an active material of a positive electrode thereof. Moreover, instead of silicon or tin, a carbon material, such as graphite, may be used as the negative electrode. An electrolytic solution contained in the secondary battery contains an organic solvent, such as ethylene carbonate or diethyl carbonate, and lithium salt, such as lithium hexafluorophosphate.

As described in "A Guide to the Safe Use of Secondary Lithium Ion Batteries in Notebook-type Personal Computers" (Japan Electronics and Information Technology Industries Association, Battery Association of Japan), the resin molded body 11 is preferably a molded body formed by molding flame-retardant resin of V-0 or higher of UL-94 standard. Specifically, a flame-retardant resin composition can be used, which is subjected to flameproofing by mixing polycarbonate (PC), polypropylene (PP), or polyethylene terephthalate (PET) with a flame retardant.

The heat absorbing layer 13 is a layer formed to absorb heat which may be generated by the secondary battery. Specifically, when the heat absorbing layer 13 has reached a predetermined temperature, a chemical reaction proceeds. Then, by utilizing a heat absorbing action achieved by this chemical reaction, the heat absorbing layer 13 absorbs the heat generated by abnormal heat generation of the secondary battery. The heat absorbing layer 13 contains a heat absorbing agent selected from the group consisting of calcium sulfate dihydrate (CaSO₄·2H₂O), sodium hydrogen carbonate (NaHCO₃), aluminum hydroxide (Al(OH)₃), magnesium hydroxide (Mg(OH)₂), and calcium carbonate (CaCO₃). The heat absorbing layer 13 contains a binding agent selected from the group consisting of polyvinylidene chloride and polyvinylidene fluoride in addition to the heat absorbing agent such that the heat absorbing agent can be surely fixed to an inner surface of the molded body 11 or an outer surface of the block layer 12. Especially, the binding agent has the flame retardancy. The melting of the binding agent by the temperature increase can be avoided by using the flame-retardant binding agent. Therefore, the heat absorbing layer 13 can absorb the heat by the heat absorbing agent while maintaining the shape of the heat absorbing layer 13.

In the case of the heat absorbing layer utilizing the melting latent heat generated by a state change that is the melting of the polymeric material as in PTL 3, the polymeric material softens and shows flowability, and the volume thereof shrinks. Therefore, the secondary battery 2 may be exposed from the heat absorbing layer. If the heat-generating secondary battery 2 is exposed, the temperature increase of the surface of the battery pack cannot be suppressed. In the case of using the flame-retardant binding agent and the heat absorbing agent which absorbs the heat by utilizing the heat absorbing action achieved by the chemical reaction as above, the softening of the heat absorbing layer 13 can be suppressed. Therefore, it is possible to form the heat absorbing layer 13 resistant to a further high temperature.

To prevent a molten material of an alkali salt, such as lithium orthosilicate or lithium stannate, from flowing out to the outside of the battery pack, the block layer 12 is formed by the material resistant to the molten alkali salt. With this, the molten alkali salt which has leaked at the time of the occurrence of the malfunction of the secondary battery 2 can be kept in the battery pack 1 and prevented from flowing out to the outside.

Moreover, since the block layer 12 is provided on an inner side of the heat absorbing layer 13, it is possible to prevent the molten alkali salt from contacting the heat absorbing layer 13. Since it is possible to avoid the loss of the heat absorbing action of the heat absorbing layer 13 by such contact, the suppressing of the temperature increase of an outer wall of the battery pack 1 can be surely achieved.

### Method for Manufacturing Battery Pack 1

The battery pack 1 according to Embodiment 1 can be manufactured by the following steps (A) to (E).
Step (A): A step of forming the molded body 11 having an accommodating space therein such that the rechargeable secondary battery 2 can be stored in the accommodating space.
Step (B): A step of preparing an application liquid containing the heat absorbing agent and the flame-retardant binding agent, the heat absorbing agent absorbing the heat by utilizing the heat absorbing action achieved by the chemical reaction.
Step (C): A step of applying the application liquid to an inner wall of the molded body 11 to form the heat absorbing layer 13.
Step (D): A step of providing the block layer 12 made of the material resistant to the molten alkali salt on an inner surface (surface facing the accommodating space) side of the heat absorbing layer 13.
Step (E): A step of storing the secondary battery 2 on an inner surface side of the block layer 12.

First, in Step (A), the molded body 11 for storing the secondary battery 2 is formed by using resin. As described in "A Guide to the Safe Use of Secondary Lithium Ion Batteries in Notebook-type Personal Computers" (Japan Electronics and Information Technology Industries Association, Battery Association of Japan), the resin molded body 11 is preferably a molded body formed by molding flame-retardant resin of V-0 or higher of UL-94 standard. Specifically, a flame-retardant resin composition can be used, which is subjected to flameproofing by mixing polycarbonate (PC), polypropylene (PP), or polyethylene terephthalate (PET) with a flame retardant. Used herein as the flame retardant is a bromine-based flame retardant, such as pentabromodiphenylether, octabromodiphenylether, decabromodiphenylether, tetrabromobisphenol A, or hexabromocyclododecane, a chlorine-based flame retardant, such as chlorinated paraffin, a phosphorous flame retardant, such as aromatic phosphoester (for example, triphenylphosphate), red phosphorus, or phosphoester containing halogen, an antimony compound, such as antimony trioxide, antimony pentoxide, or bromine compound, or a metal hydroxide, such as aluminum hydroxide or magnesium hydroxide. A method for molding the molded body 11 is not especially limited, and a known method is applicable.

Next, in Step (B), the application liquid is prepared, which contains the flame-retardant binding agent and the heat absorbing agent which absorbs the heat by utilizing the heat absorbing action achieved by the chemical reaction. The application liquid is prepared by suitably blending solvents to obtain a property suitable for the application. Specifically, a paste that is the application liquid is prepared by mixing at least one heat absorbing agent selected from the group consisting of calcium sulfate dihydrate (CaSO₄·2H₂O), sodium hydrogen carbonate (NaHCO₃), aluminum hydroxide (Al(OH)₃), magnesium hydroxide (Mg(OH)₂), and calcium carbonate (CaCO₃) and at least one binding agent selected from the group consisting of polyvinylidene chloride and polyvinylidene fluoride. In the case of using polyvinylidene chloride or polyvinylidene fluoride as the binding agent, it is desirable that its solution in an organic solvent, such as N-methyl pyrrolidone (1-methyl-2-pyrrolidone), be prepared in advance and the solution be mixed with the heat absorbing agent.

Then, in Step (C), the application liquid is applied to the inner wall of the molded body 11 to form the heat absorbing layer 13. To remove the water and organic solvent contained in the application liquid, a drying treatment is carried out according to need after the application of the application liquid.

By the above steps, the heat absorbing layer 13 containing at least one heat absorbing agent selected from the group consisting of calcium sulfate dihydrate (CaSO₄·2H₂O), sodium hydrogen carbonate (NaHCO₃), aluminum hydroxide (Al(OH)₃), magnesium hydroxide (Mg(OH)₂), and calcium carbonate (CaCO₃) and at least one flame-retardant binding agent selected from the group consisting of polyvinylidene chloride and polyvinylidene fluoride can be formed on the inner surface of the molded body 11. The flame retardancy herein denotes HB or higher of UL94 standard.

Heat-absorbing reaction temperatures of respective heat absorbing agents are as follows. That is, the heat-absorbing reaction temperature of the calcium sulfate dihydrate is 80 to 150°C, the heat-absorbing reaction temperature of the sodium hydrogen carbonate is 100 to 230°C, the heat-absorbing reaction temperature of the aluminum hydroxide is 230 to 350°C, the heat-absorbing reaction temperature of the magnesium hydroxide is 350 to 450°C, and the heat-absorbing reaction temperature of the calcium carbonate is 690 to 850°C. By suitably combining these, the heat-absorbing reaction can be continuously maintained.

Each of the polyvinylidene chloride and the polyvinylidene fluoride used in the present embodiment is the flame-retardant resin and is preferable as the binding agent.

A ratio of the heat absorbing agent and the binding agent needs to be adjusted in accordance with the formability and shape-retaining property of the heat absorbing layer 13, the amount of heat generation of the secondary battery 2, the heat capacity, and the combination of the materials of the heat absorbing agent and binding agent. Such ratio cannot be determined uniquely. Therefore, the heat absorbing agent and the binding agent need to be blended in accordance with desired properties.

Next, in Step (D), the block layer 12 made of the material resistant to the molten alkali salt is provided on an inner surface (surface facing the accommodating space) side of the heat absorbing layer 13 formed in Step (C) on the inner wall surface of the resin molded body 11. Specifically, a metal foil or metal plate resistant to the molten alkali salt is provided on the inner surface side of the heat absorbing layer 13. The metal foil or the metal plate is suitably subjected to drawing in accordance with the shape of the accommodating space of the molded body 11 and is then provided. The metal foil or metal plate subjected to the drawing may have a minute gap as long as it is formed to be able to block the molten alkali salt which leaks from the secondary battery 2. However, the gap may be sealed by further carrying out welding.

A metal material used for the block layer 12 and resistant to the molten alkali salt is preferably a material which does not melt or react by contact with the molten lithium orthosilicate or the molten lithium stannate so that a hole is not formed thereon. Specifically, it is preferable to use iron, titanium, zirconium, vanadium, niobium, molybdenum, tantalum, tungsten, titanium nitride, or stainless steel, and it is more preferable to use iron, vanadium, niobium, molybdenum, tantalum, tungsten, titanium nitride, or stainless steel.

An additional layer, such as a second temperature increase suppressing layer, can be further provided on the inner surface side of the block layer 12. However, it is especially preferable that the block layer 12 be provided at a position closest to the secondary battery 2. To be specific, it is preferable that the additional layer be not provided on the inner surface side of the block layer 12 and a molten alkali salt-resistant layer that is the block layer 12 and the secondary battery 2 directly contact each other without the other layer interposed therebetween. With this, the molten alkali salt having leaked from the secondary battery 2 first contacts the block layer 12 and is blocked by the block layer 12. Therefore, the possibility of burning of the battery pack due to the molten alkali salt can be reduced. Further, in a preferred mode of the present invention, the block layer 12 is provided at a position closest to the secondary battery 2, so that the possibility of burning in the battery pack 1 can be reduced, and the temperature increase by the burning can be suppressed.

PTL 5 proposes a battery pack in which to prevent moisture from permeating the battery pack, a material, such as aluminum, stainless steel, titanium, copper, or iron plated by any one of tin, zinc, and nickel, is inserted. In this battery pack, provided as a layer closest to the secondary battery is a resin layer formed by at least one resin material selected from the group consisting of polyethylene, polypropylene, ethylene vinyl acetate copolymer, ethylene vinyl acetate alcohol copolymer, ethylene-acrylic acid copolymer, ethylene-ethyl acrylate copolymer, ethylene-methyl acrylate copolymer, ethylene-methacrylic acid copolymer, ethylene-methyl methacrylic acid copolymer, ionomer, polyacrylonitrile, polyvinylidene chloride, polytetrafluoroethylene, polychlorotrifluoroethylene, polyphenylene ether, polyethylene terephthalate hot-melt agent, and polyamide hot-melt agent. In a case where the secondary battery using silicon, tin, an alloy of silicon or tin, or an oxide of silicon or tin as the negative electrode is stored in the battery pack configured as above, the molten alkali salt leaking from the secondary battery at the time of the malfunction first contacts the resin layer, so that the resin layer may burn and this may further increase burning energy.

Lastly, in Step (E), the secondary battery 2 is stored on the inner surface side of the block layer 12 to manufacture the battery pack 1. After the secondary battery 2 is stored, the opening of the molded body 11 can be suitably sealed.

The foregoing has explained a case where in the above method for manufacturing the battery pack 1, the application liquid for forming the heat absorbing layer is applied to the inner wall surface of the molded body 11. However, the application liquid for forming the heat absorbing layer may be applied to an outer wall (surface facing toward the outside of the battery pack) of the block layer 13.

### Reference Embodiment 2

Embodiment 2 is the same as Embodiment 1 except for Step (B). Herein, matters different from those of Embodiment 1 will be explained, and the same matters as those of Embodiment 1 are omitted.

In Step (B') in Embodiment 2, the calcium sulfate hemihydrate (CaSO₄·0.5H₂O) and water are kneaded to prepare a paste. In Step (C), this paste is applied to the inner wall of the molded body 11.

The calcium sulfate hemihydrate (CaSO₄·0.5H₂O) is a so-called "calcined plaster". Each of a cast as a treatment aid used when a bone breaks and a plaster for molding is obtained by causing a reaction between powdery calcined plaster and water and hardening it. As is clear from this, the calcined plaster can bind by being kneaded with water and dried.

By using the paste obtained by kneading the calcium sulfate hemihydrate (CaSO₄·0.5H₂O) and the water, the heat absorbing agent can be applied to and hardened on the inner wall surface of the resin molded body 11. Therefore, in Embodiment 2, since calcium sulfate dihydrate can serve as both the binding agent and the heat absorbing agent, the density of the heat absorbing agent becomes higher than that of the heat absorbing layer 13 using the heat absorbing agent and the flame-retardant binding agent in Embodiment 1. Further, since the step of mixing the heat absorbing agent with the flame-retardant binding agent is unnecessary, the heat absorbing layer 13 can be formed more easily.

### Reference Embodiment 3

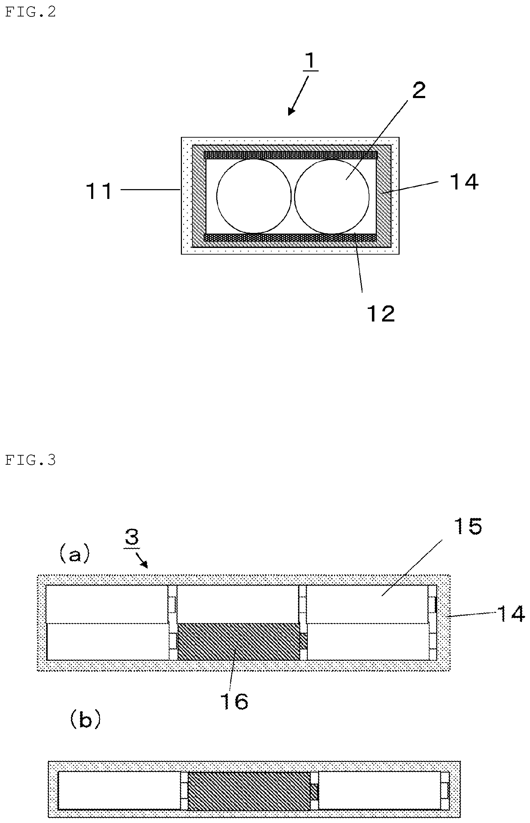

Fig. 2 is a configuration diagram showing a cross section of the battery pack 1 in Embodiment 3, where the heat insulating layer is used as the temperature increase suppressing layer.

In the battery pack 1 according to the present embodiment, a heat insulating layer 14 is provided on an inner side of the molded body 11 made of the flame-retardant resin. Further, the block layer 12 made of the material resistant to the molten alkali salt is provided so as to contact an inner surface of the heat insulating layer 14. The block layer 12 is provided at a position closest to the secondary battery 2. Embodiment 3 is the same as Embodiment 1 except for the heat insulating layer 14.

The block layer 12 made of the material resistant to the molten alkali salt is provided at a position closest to the secondary battery 2. Therefore, even if the malfunction of the secondary battery 2 occurs and the heat is extremely generated, it is possible to prevent the molten alkali salt from flowing out to the outside of the battery pack 1.

Further, since the heat insulating layer is provided on an outer side of the material resistant to the molten alkali salt, it is possible to prevent the heat insulating layer 14 from losing its function by the reaction between the molten alkali salt and the heat insulating layer 14. Thus, a heat insulating effect can be secured.

The material forming the heat insulating layer 14 is not especially limited. However, to secure the effective heat insulating effect, it is preferable to use a material having low heat conductivity, specifically a material having the heat conductivity of 0.1 W/m·K or lower. By using the material having such heat conductivity, the heat insulating effect can be obtained even if the heat insulating layer 14 is small in thickness. From the above viewpoint, examples of the material of the heat insulating layer 14 are fiber heat insulating materials, such as glass wool and rock wool; foam heat insulating materials, such as urethane foam and polystyrene foam; and vacuum heat insulating materials.

The material of the heat insulating layer 14 is preferably a material having fire resistance in order that when the abnormal heat generation of the secondary battery 2 has occurred, the heat insulating layer 14 does not melt and the adequate heat insulating effect can be maintained. As the material having the fire resistance, the heat insulating material made of an inorganic material, such as glass wool or rock wool, is preferable.

Hereinafter, the present invention will be explained in further detail using Evaluation Examples and Test Examples. However, the present invention is not limited to Evaluation Examples and Test Examples below.

### Evaluation Example 1

First, a selection method described below was carried out to select the material resistant to the molten alkali salt as the material of the block layer 12.

First, 5 g of lithium orthosilicate (Li₄SiO₄ produced by CERAC) was put in a platinum crucible and was heated and melted in an electric furnace at 1450°C under an air atmosphere.

A tablet of a material, size (diameter, thickness), and weight shown in Table 1 was put in the above melt. After the melt was heated at the above temperature for one minute, it was taken out to a stainless steel tray and cooled down. After the cooling, the solid matter was carefully broken down to take out the tablet, and the size (diameter, thickness) and weight of the tablet were measured. Table 1 shows the result.

**Table 1**

| | | Before Test | | | After Test | | | Difference (Before minus After) | | |
|---|---|---|---|---|---|---|---|---|---|---|
| Material | Melting Point | Diameter | Thickness | Weight | Diameter | Thickness | Weight | Diameter | Thickness | Weight |
| - | °C | mm | mm | g | mm | mm | g | mm | mm | g |
| Fe | 1536 | 10.006 | 4.958 | 3.029 | 10.464 | 5.126 | 3.003 | -0.485 | -0.168 | 0.026 |
| Ti | 1668 | 10.173 | 5.065 | 1.808 | 10.159 | 5.227 | 1.792 | 0.014 | -0.162 | 0.016 |
| SiO₂ | 1730 | 10.011 | 5.020 | 0.867 | 8.494 | 4.667 | 0.495 | 1.517 | 0.356 | 0.372 |
| TiO₂ | 1840 | 10.009 | 5.371 | 1.547 | Completely Melted | | | | | |
| Zr | 1852 | 10.002 | 5.111 | 2.609 | 10.151 | 5.432 | 2.623 | -0.149 | -0.321 | -0.014 |
| V | 1900 | 9.987 | 3.217 | 1.464 | 10.093 | 3.428 | 1.455 | -0.106 | -0.211 | 0.009 |
| Nb | 2468 | 10.143 | 5.152 | 3.479 | 10.196 | 5.483 | 3.447 | -0.053 | -0.331 | 0.032 |
| Mo | 2610 | 9.928 | 5.060 | 3.980 | 10.146 | 5.095 | 3.931 | -0.218 | -0.035 | 0.049 |
| ZrO₂ | 2720 | 10.017 | 4.986 | 0.946 | 10.059 | 4.995 | 0.933 | -0.042 | -0.009 | 0.013 |
| MgO | 2830 | 10.004 | 5.086 | 1.363 | 10.249 | 5.197 | 1.245 | -0.245 | -0.111 | 0.118 |
| Ta | 2996 | 10.008 | 5.143 | 6.694 | 10.281 | 5.452 | 6.627 | -0.273 | -0.309 | 0.067 |
| TiN | 3290 | 10.005 | 5.124 | 1.969 | 10.027 | 5.141 | 1.950 | -0.022 | -0.017 | 0.019 |
| W | 3387 | 9.994 | 5.167 | 7.732 | 10.017 | 5.274 | 7.638 | -0.023 | -0.107 | 0.094 |
| TaC | 3980 | 10.272 | 5.018 | 3.273 | Crushed | | | | | |

In the case of TiO₂, the tablet was not found in the cooled solid matter and was thought to completely react with the molten lithium orthosilicate to be disappeared.

In the case of TaC, a pellet was crushed as soon as it was put in a high-temperature electric furnace, and the shape of the pellet could not be maintained.

In the case of SiO₂, it was found that the diameter, thickness, and weight of the tablet were apparently decreased, and SiO₂ reacted with the molten lithium orthosilicate.

In the case of the other materials, the size after the test became larger than that before the test. It was thought that this change in size was caused by the expansion of the air in the tablet. Regarding the change in weight measured as above, the weight was not significantly decreased. Therefore, it was found that metals resistant to the molten alkali salt were iron, titanium, zirconium, vanadium, niobium, molybdenum, zirconium oxide, magnesium oxide, tantalum, tungsten, and titanium nitride.

Among these metals selected in the above first selection, materials which were comparatively easily processed and easily tested as a metal foil (plate) were Fe, Ti, Zr, V, Nb, Mo, Ta, W, and TiN, and a material which was an iron-based material and high in versatility was stainless steel. The following test was further carried out to evaluate the further high resistances of these metals to the molten alkali salt.

### Evaluation Example 2

First, metal foils (50 µm in thickness) of respective materials were prepared. A cubular container (hereinafter referred to as a "cup") 20 mm on a side was produced from each metal foil by welding.

7 g of lithium orthosilicate was put in the platinum crucible and heated and melted in the electric furnace at 1450°C under the air atmosphere. The melt was put in the cup in the atmosphere. After the cooling, the appearance of the cup was observed to check whether or not a hole was formed and whether or not a portion from which a molten material flowed out was formed. Table 2 shows the results.

**Table 2**

| Material | Hole | Molten Material |
|---|---|---|
| Fe | Not formed | Not flowed out |
| Ti | Formed at bottom | Flowed out |
| Zr | Formed at bottom | Flowed out |
| V | Not formed | Not flowed out |
| Nb | Not formed | Not flowed out |
| Mo | Not formed | Not flowed out |
| Ta | Not formed | Not flowed out |
| w | Not formed | Not flowed out |
| TiN | Not formed | Not flowed out |
| Stainless Steel | Not formed | Not flowed out |

In the case of the cup made of Ti or Zr, it was observed that the bottom of the cup melted, a large hole was formed, and the molten material flowed out from the hole.

It was found from the above results that among the metal materials tested as above, iron, vanadium, niobium, molybdenum, tantalum, tungsten, titanium nitride, and stainless steel were excellent in resistance to the molten alkali salt.

### Test Example 1

Cups as above were produced using the metal materials selected in the above Evaluation Examples. In addition, a cubic cup 22 mm on an inner side was produced using a polycarbonate plate (1 mm in thickness). Using these cups, a three-layer-structure cup was produced by the following procedure.

12 g of sodium hydrogen carbonate (Special Grade Reagent produced by Wako Pure Chemical Industries, Ltd.) and 10 g of KF polymer #1120 (polyvinylidene fluoride 12% N-methyl pyrrolidone solution produced by Kureha Corporation) were mixed and stirred. Then, the mixture was applied to an outer surface of the stainless steel cup. Before this application liquid dried, the stainless steel cup was inserted in the polycarbonate cup, and these cups were dried at room temperature. In the obtained three-layer-structure cup, the heat absorbing layer containing sodium hydrogen carbonate and polyvinylidene fluoride was about 1 mm in thickness.

After the molten lithium orthosilicate was put in the three-layer-structure cup, the appearance of the cup was observed to check whether or not the molten material flowed out. In any case, the polycarbonate plate softened but did not melt, and the molten alkali salt did not flow out. To be specific, the loss of the function of the heat absorbing layer was prevented by providing in the cup the block layer made of the material resistant to the molten alkali salt, the increase in surface temperature of the molded body was suppressed by the heat absorbing layer, and the polycarbonate plate was prevented from melting.

### Comparative Test Example 1

The molten lithium orthosilicate was directly put in the same polycarbonate cup as in Test Example 1. In this case, the polycarbonate plate melted, and the molten lithium orthosilicate flowed out to the outside of the cup.

### Comparative Test Example 2

The same cups as in Evaluation Example 2 were produced by using stainless steel, iron, vanadium, niobium, molybdenum, tantalum, tungsten, and titanium nitride selected in Evaluation Example 2. Each of these cups was inserted in the same polycarbonate cup as in Test Example 1 to produce a two-layer-structure cup.

As with Test Example 1, the molten lithium orthosilicate was put in the cup to check whether or not the molten material flowed out. As a result, in the case of any metal cup, the molten alkali salt did not flow out unlike Comparative Test Example 1. However, the surface temperature of the molded body increased, so that the polycarbonate plate melted. Therefore, the shape of the molded body 11 was not maintained.

### Comparative Test Example 3

The sodium hydrogen carbonate-polyvinylidene fluoride paste prepared in Test Example 1 was applied to an inner wall of the same polycarbonate cup as in Test Example 1 and the cup was dried to produce the two-layer-structure cup. The molten lithium orthosilicate was put in the two-layer-structure cup. In this case, the heat absorbing layer and the lithium orthosilicate reacted with each other and burned. In addition, the polycarbonate plate melted, and the molten lithium orthosilicate flowed out to the outside of the cup.

### Test Example 2

6 g of aluminum hydroxide (Special Grade Reagent produced by Wako Pure Chemical Industries, Ltd.) and 10 g of KF polymer #1120 were mixed and stirred. Then, the mixture was applied to an outer surface of each of the cups produced by respectively using stainless steel, iron, vanadium, niobium, molybdenum, tantalum, tungsten, and titanium nitride as with Evaluation Example 2. Before the application liquid dried, these metal cups were respectively inserted in the polycarbonate cups, and these cups were dried at room temperature.

The same evaluation test as in Test Example 1 was carried out for the obtained three-layer-structure cups. In the case of any metal cup, the polycarbonate plate softened but did not melt, and the molten alkali salt did not flow out.

A maximum temperature of the outer surface of the polycarbonate when the molten lithium orthosilicate was put in the cup was 350°C.

### Test Example 3

6 g of magnesium hydroxide (Special Grade Reagent produced by Wako Pure Chemical Industries, Ltd.) and 10 g of KF polymer #1120 were mixed and stirred. Then, the mixture was applied to the outer surface of each of the cups produced by respectively using stainless steel, iron, vanadium, niobium, molybdenum, tantalum, tungsten, and titanium nitride as with Evaluation Example 2. Before the application liquid dried, these metal cups were respectively inserted in the polycarbonate cups, and these cups were dried at room temperature.

The same evaluation test as in Test Example 1 was carried out for the obtained three-layer-structure cups. In the case of any metal cup, the polycarbonate plate softened but did not melt, and the molten alkali salt did not flow out.

The maximum temperature of the outer surface of the polycarbonate when the molten lithium orthosilicate was put in the cup was 450°C.

### Test Example 4

6 g of calcium sulfate dihydrate (Special Grade Reagent produced by Wako Pure Chemical Industries, Ltd.) and 10 g of KF polymer #1120 were mixed and stirred. Then, the mixture was applied to the outer surface of each of the cups produced by respectively using stainless steel, iron, vanadium, niobium, molybdenum, tantalum, tungsten, and titanium nitride as with Evaluation Example 2. Before the application liquid dried, these metal cups were respectively inserted in the polycarbonate cups, and these cups were dried at room temperature.

The same evaluation test as in Test Example 1 was carried out for the obtained three-layer-structure cups. In the case of any metal cup, the polycarbonate plate softened but did not melt, and the molten alkali salt did not flow out.

The maximum temperature of the outer surface of the polycarbonate when the molten lithium orthosilicate was put in the cup was 400°C.

### Reference Test Example 5

A paste was prepared by kneading calcium sulfate hemihydrate (produced by Kojundo Chemical Lab. Co., Ltd.) and pure water at a volume ratio of 1 : 1. Then, the paste was applied to the outer surface of each of the cups produced by respectively using stainless steel, iron, vanadium, niobium, molybdenum, tantalum, tungsten, and titanium nitride as with Evaluation Example 2. Before the paste dried, these metal cups were respectively inserted in the polycarbonate cups, and these cups were dried at room temperature.

The same evaluation test as in Test Example 1 was carried out for the obtained three-layer-structure cups. In the case of any metal cup, the polycarbonate plate softened but did not melt, and the molten alkali salt did not flow out.

The maximum temperature of the outer surface of the polycarbonate when the molten lithium orthosilicate was put in the cup was 400°C.

### Test Example 6

6 g of calcium carbonate (Special Grade Reagent produced by Wako Pure Chemical Industries, Ltd.) and 10 g of KF polymer #1120 were mixed and stirred. Then, the mixture was applied to the outer surface of each of the cups produced by respectively using stainless steel, iron, vanadium, niobium, molybdenum, tantalum, tungsten, and titanium nitride as with Evaluation Example 2. Before the application liquid dried, these metal cups were respectively inserted in the polycarbonate cups, and these cups were dried at room temperature.

The same evaluation test as in Test Example 1 was carried out for the obtained three-layer-structure cups. In the case of any metal cup, the polycarbonate plate softened but did not melt, and the molten alkali salt did not flow out.

The maximum temperature of the outer surface of the polycarbonate when the molten lithium orthosilicate was put in the cup was 400°C.

### Test Example 7

6 g of polyvinylidene chloride (Saran Wrap (R) produced by Asahi Kasei Chemicals Corporation) was dissolved in 50 g of N-methyl pyrrolidone (Special Grade Reagent produced by Wako Pure Chemical Industries, Ltd.). Thus a N-methyl pyrrolidone solution containing the polyvinylidene chloride at a concentration of 12% was prepared. The same sample as in Test Example 2 was prepared except that this solution was used instead of KF polymer #1120, and the test was carried out.

In the case of any metal cup, the polycarbonate plate softened but did not melt, and the molten alkali salt did not flow out.

The maximum temperature of the outer surface of the polycarbonate when the molten lithium orthosilicate was put in the cup was 410°C.

### Reference Test Example 8

A paste was prepared by kneading the calcium sulfate paste obtained in Test Example 5 and magnesium hydroxide at a volume ratio of 1 : 1. The same sample as in Test Example 5 was prepared except that this paste was applied to the outer surface of the metal cup, and the test was carried out.

In the case of any metal cup, the polycarbonate plate softened but did not melt, and the molten alkali salt did not flow out.

The maximum temperature of the outer surface of the polycarbonate when the molten lithium orthosilicate was put in the cup was 420°C.

### Test Example 9

The same sample as in Test Example 2 was prepared except that the application liquid obtained by mixing and stirring 4 g of sodium hydrogen carbonate, 2 g of aluminum hydroxide, 2 g of magnesium hydroxide, and 10 g of KF polymer #1120 was applied to the outer surface of the metal cup, and the test was carried out.

In the case of any metal cup, the polycarbonate plate softened but did not melt, and the molten alkali salt did not flow out.

The maximum temperature of the outer surface of the polycarbonate when the molten lithium orthosilicate was put in the cup was 350°C.

In Test Examples 1 to 9 above, although the softening of the polycarbonate plate as the molded body 11 was observed, the outflow of the molten alkali salt and the melting of the polycarbonate plate were not observed unlike Comparative Test Examples 1 to 3. To be specific, since the heat absorbing layer 13 and the block layer 12 are formed in this order on an inner side of the molded body 11, the heat absorbing layer 13 does not burn by the reaction with the molten alkali salt, and the shape and function of the heat absorbing layer 13 can be maintained. Therefore, the temperature increase of the surface of the molded body 11 can be suppressed.

### Reference Test Example 10

An effect obtained by providing the heat insulating layer as the temperature increase suppressing layer was calculated by thermal simulation using commercially available finite volume method versatile thermo-fluid analysis software "Fluent".

Fig. 3 shows the configuration of a model used for the calculation. In a battery pack model 3, six cylindrical batteries 15 each having a diameter of 18 mm and a length of 65 mm were used, and a heat insulating layer (heat conductivity: 0.05 W/m·K) 14 having a thickness of 1 mm was provided on an outer side of these cylindrical batteries 15. This battery pack model did not include the molded body and the block layer. Table 3 shows various physical values used for the calculation.

**Table 3**

| | Thermal Conductivity [W/m·K] | Specific Heat [kJ/kg·K] | Density [kg/m³] |
|---|---|---|---|
| Battery | 5 | 0.96 | 2272 |
| Heat-insulating layer | 0.05 | 1.6 | 318 |

A heat resistance by contact was assumed to be zero. A coefficient of heat conduction to a lower portion of the battery pack model was set to 10 W/m²K, and a coefficient of heat conduction to a side surface of the battery pack model was set to 6 W/m²K.

One battery 16 was assumed to have caused abnormal heat generation. A heat generation rate was set to 1 kW, and a heat generation time was set to 60 seconds. The maximum temperature of the heat-generating battery 16 and the maximum temperature of the surface of the battery pack model 3 were calculated.

In the case of using the present model, the maximum temperature of the heat-generating battery was 1080°C, and the maximum temperature of the surface of the pack was 203°C.

### Comparative Test Example 4

As a comparison, calculations were carried out using the same model as in Test Example 10 except that a resin layer (heat conductivity: 0.2 W/m·K) was provided instead of the heat insulating layer.

In the case of using the present model, the maximum temperature of the heat-generating battery was 1030°C, and the maximum temperature of the surface of the pack was 450°C.

It was found from the results of Test Example 10 and Comparative Test Example 4 that even if the battery causes the abnormal heat generation, the temperature increase of the surface of the pack can be suppressed by providing the heat insulating layer in the pack as long as the loss of the function of the heat insulating layer in the pack by burning does not occur. Further, it was found from the result of Evaluation Example 1 that the inorganic materials, such as ceramics, used for the heat insulating material are low in resistance to the molten alkali salt and the heat insulating function thereof is lost or decreases by the direct contact with the molten alkali salt.

To be specific, even in the case of using the heat insulating layer which is low in resistance to the molten alkali salt, the reaction between the heat insulating layer and the molten alkali salt can be prevented and the heat insulating effect can be achieved by providing a layer resistant to the molten alkali salt at a position closest to the secondary battery.

### Industrial Applicability

In accordance with the battery pack of the present invention, even if a malfunction of the secondary battery occurs and some kind of leakage occurs, it is possible to prevent contents from flowing out to the outside of the battery pack and surely suppress the temperature increase of the surface of the battery pack. Especially, even in a case where the electrode active material of the negative electrode of the secondary battery is silicon, tin, an alloy of silicon or tin, or an oxide of silicon or tin, and the molten alkali salt leaks from the secondary battery at the time of malfunction, the molten alkali salt does not flow out to the outside of the battery pack, and the temperature increase of the surface of the pack can be suppressed. Therefore, the battery pack of the present invention can be preferably used as a PC battery pack, a mobile phone battery pack, or the like. Moreover, the battery pack of the present invention is also applicable to a packaged large-size stationary battery, an electric car battery, or the like.

### Reference Signs List

- 1: battery pack
- 2: secondary battery
- 3: battery pack model
- 11: resin molded body (battery storing container)
- 12: block layer
- 13: heat absorbing layer
- 14: heat insulating layer
- 15: cylindrical battery
- 16: heat-generating battery

## Claims

1. A battery pack comprising:
a plurality of secondary batteries;
a molded body configured to store therein the secondary batteries;
a temperature increase suppressing layer provided between the secondary batteries and an inner surface of the molded body to suppress a temperature increase of an outer surface of the molded body; and
a block layer provided between the secondary batteries and the temperature increase suppressing layer to block leakage from the secondary battery, wherein
the temperature increase suppressing layer is a heat absorbing layer containing a flame-retardant binding agent and a heat absorbing agent, wherein:
the heat absorbing agent contains at least one selected from the group consisting of calcium sulfate dihydrate (CaSO₄·2H₂O), sodium hydrogen carbonate (NaHCO₃), aluminum hydroxide (Al(OH)₃), magnesium hydroxide (Mg(OH)₂), and calcium carbonate (CaCO₃); and
the flame-retardant binding agent contains at least one selected from the group consisting of polyvinylidene chloride and polyvinylidene fluoride .

2. The battery pack according to claim 1, wherein the block layer is provided at a position closest to the secondary battery.

3. The battery pack according to claim 1, wherein a negative electrode of the secondary battery contains silicon, tin, an alloy of silicon or tin, or an oxide of silicon or tin.

4. The battery pack according to claim 1, wherein the block layer is formed by a material resistant to a molten alkali salt.

5. The battery pack according to claim 4, wherein the material resistant to the molten alkali salt contains iron, titanium, zirconium, vanadium, niobium, molybdenum, tantalum, tungsten, titanium nitride, or stainless steel.

## Patentansprüche

1. Batteriepack, umfassend:
eine Mehrzahl von Sekundärbatterien;
einen Formkörper, der konfiguriert ist, um die Sekundärbatterien darin zu speichern;
eine Temperaturanstiegsunterdrückungsschicht, die zwischen den Sekundärbatterien und einer Innenfläche des Formkörpers bereitgestellt ist, um einen Temperaturanstieg einer Außenfläche des Formkörpers zu unterdrücken; und
eine Blockschicht, die zwischen den Sekundärbatterien und der Temperaturanstiegsunterdrückungsschicht bereitgestellt ist, um Leckagen aus der Sekundärbatterie zu blockieren, wobei
die Temperaturanstiegsunterdrückungsschicht eine wärmeabsorbierende Schicht ist, die ein flammhemmendes Bindemittel und ein wärmeabsorbierendes Mittel enthält, wobei:
das wärmeabsorbierende Mittel zumindest eines ausgewählt aus der Gruppe bestehend aus Calciumsulfatdihydrat (CaSO₄·2H₂O), Natriumhydrogencarbonat (NaHCO₃), Aluminiumhydroxid (Al(OH)₃), Magnesiumhydroxid (Mg(OH)₂) und Calciumcarbonat (CaCO₃) enthält; und
das flammhemmende Bindemittel zumindest eines ausgewählt aus der Gruppe bestehend aus Polyvinylidenchlorid und Polyvinylidenfluorid enthält.

2. Batteriepack nach Anspruch 1, wobei die Blockschicht an einer Stelle bereitgestellt ist, die der Sekundärbatterie am nächsten liegt.

3. Batteriepack nach Anspruch 1, wobei eine negative Elektrode der Sekundärbatterie Silicium, Zinn, eine Legierung aus Silicium oder Zinn oder ein Oxid aus Silicium oder Zinn enthält.

4. Batteriepack nach Anspruch 1, wobei die Blockschicht aus einem Material gebildet ist, das gegen ein geschmolzenes Alkalisalz beständig ist.

5. Batteriepack nach Anspruch 4, wobei das gegen das geschmolzene Alkalisalz beständige Material Eisen, Titan, Zirkonium, Vanadium, Niob, Molybdän, Tantal, Wolfram, Titannitrid oder Edelstahl enthält.

## Revendications

1. Bloc-batterie comprenant :
une pluralité de batteries secondaires ;
un corps moulé configuré pour y stocker les batteries secondaires ;
une couche de suppression d'augmentation de température prévue entre les batteries secondaires et une surface intérieure du corps moulé pour supprimer une augmentation de température d'une surface extérieure du corps moulé ; et
une couche de blocage prévue entre les batteries secondaires et la couche de suppression d'augmentation de température pour bloquer des fuites provenant de la batterie secondaire, dans lequel
la couche de suppression d'augmentation de température est une couche absorbant la chaleur contenant un agent de liaison retardateur de flamme et un agent absorbant la chaleur, dans lequel :
l'agent absorbant la chaleur contient au moins un élément choisi dans le groupe consistant en le sulfate de calcium bihydraté (CaSO₄·2H₂O), l'hydrogénocarbonate de sodium (NaHCO₃), l'hydroxyde d'aluminium (Al(OH)₃), l'hydroxyde de magnésium (Mg(OH)₂), et le carbonate de calcium (CaCO₃) ; et
l'agent de liaison retardateur de flamme contient au moins un élément choisi dans le groupe consistant en le polychlorure de vinylidène et le polyfluorure de vinylidène.

2. Bloc-batterie selon la revendication 1, dans lequel la couche de blocage est prévue à une position la plus proche de la batterie secondaire.

3. Bloc-batterie selon la revendication 1, dans lequel une électrode négative de la batterie secondaire contient le silicium, l'étain, un alliage de silicium ou d'étain, ou un oxyde de silicium ou d'étain.

4. Bloc-batterie selon la revendication 1, dans lequel la couche de blocage est formée par un matériau résistant à un sel alcalin fondu.

5. Bloc-batterie selon la revendication 4, dans lequel le matériau résistant au sel alcalin fondu contient le fer, le titane, le zirconium, le vanadium, le niobium, le molybdène, le tantale, le tungstène, le nitrure de titane, ou l'acier inoxydable.
